# EUROPEAN PATENT SPECIFICATION

(11) **EP 0 670 288 B1**
(45) Date of publication and mention of the grant of the patent: **05.12.2001**
(21) Application number: 94830024.9
(22) Date of filing: 25.01.1994
(51) Int. Cl.: C02F 1/48

(54) **Magnetic resonance scale preventer-decalcifier, connected to a transformer of the controlled reluctance type**
Magnetische Resonanzvorrichtung zum Verhindern oder Beseitigen von Calciumablagerungen, gekoppelt mit einem Transformator, Type kontrollierte Reluktanz
Appareil à résonance magnétique pour prévenir et éliminer l'incrustation de tartre, connecté à un transformateur du type à reluctance contrôlée

(43) Date of publication of application: 06.09.1995
(73) Proprietor: Pandolfo, Salvatore Mario, I-01100 Viterbo (IT)
(72) Inventor: Pandolfo, Salvatore Mario, I-01100 Viterbo (IT)
(74) Representative: Coppi, Cecilia

(56) References cited:
- WO-A-88/05763
- BE-A- 560 035
- BE-A- 1 002 892

## Description

The invention relates to a scale preventer/decalcifier device according to the preamble of claim 1.

It is known that the use of hard water, both for domestic consumption and industrial applications, creates serious problems resulting from the deposit of lime whenever the water, when heated, converts part of the calcium bicarbonate it contains into insoluble calcium carbonate.

In an attempt to eliminate or at least mitigate this phenomenon, various systems have been used in the past, primarily based on the use of chemicals (phosphates) or physico/chemical products (ion exchange resins) which do, however, have a variety of disadvantages related to high plant and maintenance costs. In fact, the chemicals cause the quality of the water, particularly for domestic consumption purposes, to deteriorate, also causing conditions of environmental pollution, whilst the physico/chemical products cause an actual demineralization which makes the water unsuitable for domestic consumption purposes.
In recent times the use has also been known of electro-physics systems, such as permanent magnets or electromagnets, which enable almost acceptable results to be obtained but only if the treated water is of medium hardness, not more than 40 degrees French. Furthermore, this apparatus does not permit a variable molecular magnetization to be obtained which persists over time and in direct relation to the quantity of treated suppliable liquid, nor does it prevent the conversion of bicarbonate into aragonite or varetite.

Patent WO-A-8805763 and other prior art disclose a device employing a pulse generator connected to a first coil. The coil being wound around a second coil resonance coil associated to a resonance circuit and wound around a pipe through which water flows. The resonance frequency may be regulated by acting on the controls of the output of the generator and by regulating RC groups in the resonant circuit, as for example by varying a capacity. The resonant circuit is connected to earth by a polarisation diode.

The object of the invention is to permit the manufacture of a scale preventer/decalcifier device which is simple, reliable, with no limits as to size and of modest cost, to be used to treat water of any hardness and also at elevated temperatures, which prevents the conversion of the bicarbonate in solution into insoluble calcium carbonate and which permits the dissolution of the lime already built up on the walls of the pipes through the persistence in the liquid of the molecular magnetization effect.

This and other objects which will emerge in greater detail below are all achieved by the scale preventer/decalcifier device comprising the combination of feature according to claim 1.

The water flowing through the pipework comprises a nucleus resonating at the signal coming from the triple coil and through the effect of aggregating polarization or decreasing ionization it maintains the equilibrium according to the following formula

CA(HCO₃)₂ = CACO₃ + H₂O + CO₂

preventing the formation of calcium carbonate even at elevated temperatures.

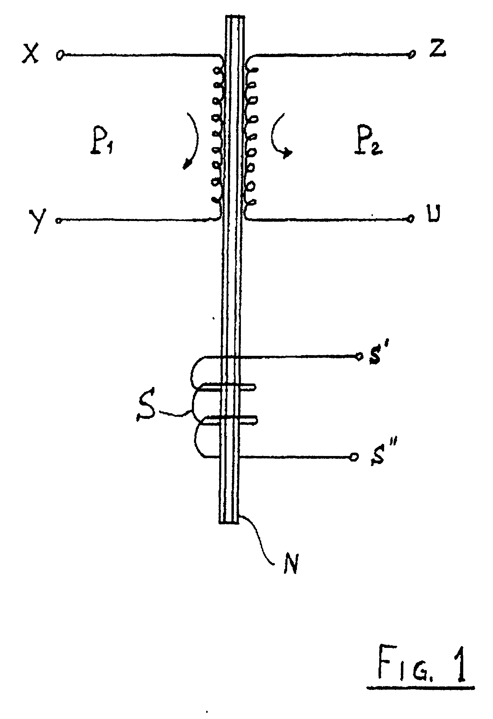

Further objects and advantages will emerge from the description below and from the accompanying drawings which show an embodiment of the invention in a diagrammatic manner by way of example with referenze to the accompanying drawings in which:-
Fig. 1 shows the diagram of a controlled reluctance transformer;

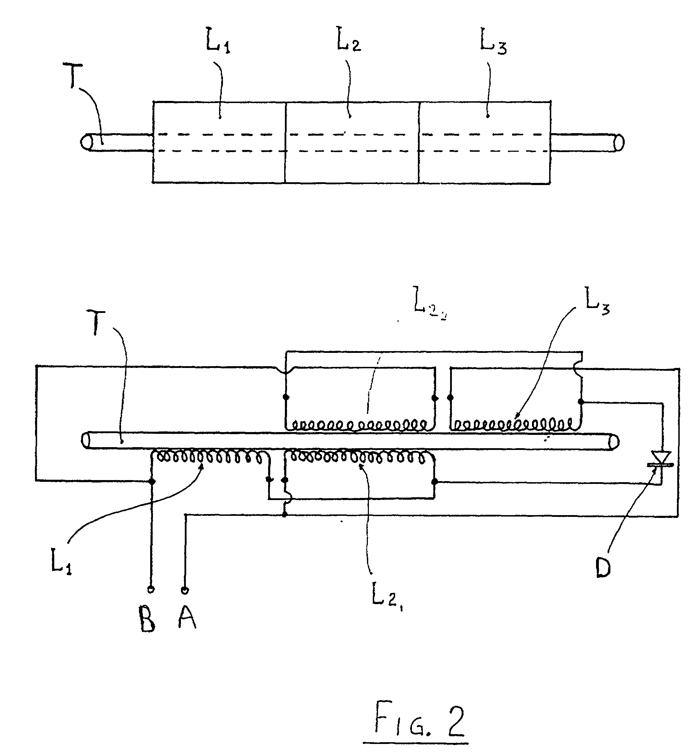

Fig. 2 shows a trio of coils wound round a steel pipe;
Fig. 3 shows the wiring diagram for connecting the said coils.

A controlled reluctance transformer is produced by winding a first primary winding P1 clockwise round a core N and a second primary winding P2 anticlockwise around the core N; the secondary winding S also being wound round the said core N.

The primary windings P1 and P2 are made of copper wire of suitable cross-section from a 220 V mains supply and are connected together according to the diagram x-y and u-z with the potential difference being subtracted. The secondary winding S is also made of copper wire and the number of turns of the secondary are such that 9 V is supplied to output terminals S' and S'' which are directly connected to inputs A-B of resonance coils (Fig. 3).

Resonance coils L1, L2 and L3 are wound round Teflon formers of suitable diameter and bore, and are mounted coaxial with pipe T. Specifically, coils L1 and L3 are single windings and produced with an equa 1 number of copper wire turns while coil L2 is made with two windings equivalent in terms of number of turns, each equal to half the number of turns relative to coil L1 or L3. The windings of coil 2 are wound in the opposite direction with respect to the other.

The three coils L1, L2 and L3 are also connected to an alternating supply and interconnected by a rapid commutation single phase rectifier D which has the effect of damping the reversel peaks of the alternating supply. The rectifier is preferably in the form of a semiconductor diode.

The supply is via the secondary of the transformer at low voltage and alternating current, with no polarized capacitive filters. By altering the relative magnitude of the voltages in the primary windings P1 and P2, the coils L1, L2 and L3 can be made resonate at different frequencies due to alteration of the amplitude of the alternating signal in the coils L1, L2 and L3 and by the relative length of the positive half wave as compared with the length of the negative half wave as affected by the rectifier D.

## Claims

1. A magnetic resonance decalcifier device, comprising a generator for feeding with an alternate electric power of certain voltage and certain frequency at least one resonance circuit (L1, L2, L3) associated to a pipe (T) in which water flows, and comprising at least one resonance coil (L1, L3) resonating at a prestabilished frequency, **characterised in that** it comprises
a) a control reluctance transformer, having two primaries (P1, P2) which comprise two windings connected in parallel and wound in opposite directions and a secondary (S) connected to the resonating circuit.
b) The resonance circuit comprising a trio of resonance coils (L1, L2, L3), directly connected to the secondary (S) of the controlled reluctance transformer and coaxial to the pipe (T) the water flowing through which water acting as a resonant nucleus;
c) A rectifier (D) in form of a semiconductor diode capable of damping the reversal peaks in the resonance coils.
d) the said trio of coils comprises two single winding coils (L1, L3) which are equal and located laterally to a third coil (L2) with double winding which is inverted and resonates at variable frequencies.

2. A device according to claim 1, **characterised in that** the said coils (L1, L2, L3) are connected between phase and counterphase by the said rectifier (D) which causes a half-wave cut at the variable frequencies.

3. A device according to claim 1, **characterised in that** it is supplied with alternating current at low voltage

## Patentansprüche

1. Eine Magnetresonanz-Entkalkungseinrichtung, bestehend aus einem Generator für die Speisung mit Wechselstrom einer bestimmten Spannung und Frequenz von mindestens einem Resonanzkreis (L1, L2, L3) und einem zugehörigen Rohr (T), in dem Wasser fließt, sowie mindestens einer Resonanzspule (L1, L3), die mit einer festgelegten Frequenz mitschwingt, **dadurch gekennzeichnet, dass** sie umfasst:
a) einen Transformator mit gesteuerter Reluktanz mit zwei Primärwicklungen (P1, P2), die zwei parallel geschaltete und in entgegengesetzten Richtungen gewickelte Windungen umfassen, und eine Sekundärwicklung (S), die mit dem Resonanzkreis verbunden ist;
b) der Resonanzkreis umfasst eine Dreiergruppe von Resonanzspulen (L1, L2, L3), die direkt an die Sekundärwicklung (S) des Transformators mit gesteuerter Reluktanz angeschlossen und koaxial zum Rohr (T), durch das das Wasser fließt, angeordnet sind, wobei das Wasser wie ein schwingungsfähiger Kern wirkt;
c) ein Gleichrichter (D) in Form einer Halbleiterdiode, die in der Lage ist, die Umschaltspitzen in der Resonanzspule zu dämpfen;
d) die genannte Dreiergruppe von Spulen umfasst zwei Einwicklungsspulen (L1, L3), die gleich und seitlich von einer dritten Spule (L2) mit zwei Wicklungen, die invertiert ist und mit variablen Frequenzen mitschwingt, angeordnet sind.

2. Einrichtung gemäß Anspruch 1, **dadurch gekennzeichnet, dass** die genannten Spulen (L1, L2, L3) durch den genannten Gleichrichter (D), der einen Halbwellenschnitt bei den variablen Frequenzen erzeugt, zwischen Phase und Gegenphase geschaltet sind.

3. Einrichtung gemäß Anspruch 1, **dadurch gekennzeichnet, dass** sie mit einem Wechselstrom mit Niederspannung gespeist wird.

## Revendications

1. Un dispositif décalcifiant à résonance magnétique, comprenant un générateur pour alimenter en courant électrique alternatif d'un certain voltage et d'une certaine fréquence, au moins un circuit de résonance (L1, L2, L3) associé à un tuyau (T) dans lequel de l'eau s'écoule et comprenant au moins une bobine de résonance (L1, L3) résonnant à une fréquence préétablie, **caractérisé en ce qu'**il comprend
a) Un transformateur à réluctance contrôlée ayant deux primaires (P1, P2) qui renferment deux enroulements connectés en parallèle et enroulés dans des directions opposées et un secondaire (8) connecté au circuit de résonance.
b) Le circuit de résonance comprenant trois bobines de résonance (L1, L2, L3), directement connectées au secondaire (S) du transformateur à réluctance contrôlée et coaxiales au tuyau (1), l'eau s'écoulant à travers agissant comme un noyau résonant.
c) Un redresseur (D) sous forme de diode à semi-conducteurs en mesure d'amortir les pics d'inversion dans les bobines de résonance.
d) Lesdites trois bobines comprennent deux bobines d'enroulement séparées (L1, L3) qui sont identiques et situées latéralement à la troisième bobine (L2) avec un double enroulement qui est inversé et entre en résonance à des fréquences variables.

2. Un dispositif selon la revendication 1,
**caractérisé en ce que** lesdites bobines (L1, L2, L3) sont connectées entre la phase et la contre-phase par ledit redresseur (D) qui provoque une coupure d'alternance aux fréquences variables.

3. Un dispositif selon la revendication 1,
**caractérisé en ce qu'**il fonctionne avec du courant alternatif à faible voltage.
